(19) Europäisches Patentamt / European Patent Office / Office européen des brevets

(11) **EP 3 656 987 B1**

(12) **EUROPEAN PATENT SPECIFICATION**

(45) Date of publication and mention of the grant of the patent:
**05.01.2022   Bulletin 2022/01**

(51) Int Cl.:
**F01D 21/00** *(2006.01)*      **G01B 11/16** *(2006.01)*

(21) Application number: **18208171.1**

(22) Date of filing: **23.11.2018**

(54) **METHOD FOR CALCULATING AND METHOD FOR MONITORING THE CREEP ELONGATION OF A ROTOR**

VERFAHREN ZUR BERECHNUNG UND VERFAHREN ZUR ÜBERWACHUNG DER KRIECHDEHNUNG EINES ROTORS

PROCÉDÉ POUR CALCULER ET PROCÉDÉ DE SURVEILLANCE DE L'ALLONGEMENT DE FLUAGE D'UN ROTOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.05.2020   Bulletin 2020/22**

(73) Proprietor: **Ansaldo Energia Switzerland AG**
**5401 Baden (CH)**

(72) Inventors:
• **SISTANINIA, Meisam**
  **5200 BRUGG (AG) (CH)**
• **WINGE, Torsten**
  **5408 ENNETBADEN (CH)**

(74) Representative: **Bernotti, Andrea et al**
**Studio Torta S.p.A.**
**Via Viotti, 9**
**10121 Torino (IT)**

(56) References cited:
**CH-A2- 706 827     US-B1- 8 770 913**

• **EVANS M: "A generalised Monkman-Grant relation for creep life prediction: An application to 1CrMoV rotor steel", JOURNAL OF MATERIALS SCIENCE, KLUWER ACADEMIC PUBLISHERS, BO, vol. 41, no. 12, 12 April 2006 (2006-04-12), pages 3907-3915, XP019398969, ISSN: 1573-4803, DOI: 10.1007/S10853-005-5506-7**
• **KAZUHIRO KIMURA ET AL: "Creep Deformation, Rupture Strength, and Rupture Ductility of Grades T/P92 Steels", ASME 2014 SYMPOSIUM ON ELEVATED TEMPERATURE APPLICATION OF MATERIALS FOR FOSSIL, NUCLEAR, AND PETROCHEMICAL INDUSTRIES, 25 March 2014 (2014-03-25), page 193, XP055576598, DOI: 10.1115/ETAM2014-1026 ISBN: 978-0-7918-4074-0**

**Description**

TECHNICAL FIELD

The present invention relates to a method for calculating and a method for monitoring the creep elongation of a rotor.

BACKGROUND

During operation of a gas turbine the rotor undergoes large thermal and mechanical stresses, which cause its deformation in the form of a permanent radial elongation or expansion; this elongation is known as creep deformation, creep growth or creep elongation.

Calculating and monitoring the creep elongation is of the uttermost importance, because creep elongation causes an increase of the diameter of the rotor and therefore a reduction, over time, of the clearances between the rotor or components connected thereto and the stator or components connected thereto. Also it can be used as indication of the consumed creep lifetime.

Reduction of the clearances can influence the operation parameters and cooling and could also cause interference between rotor or components connected to it and stator or components connected to it.

US 8 770 913 B1 discloses a method for calculating a creep elongation of a rotor. According to the method, a creep deflection model for the radius of a critical location of the rotor is provided, a reference temperature is measured at sampling moments and the creep elongation at the sampling moment is calculated on the basis of the measured reference temperature and the creep elongation at a preceding moment.

Other examples of known methods are disclosed in EVANS M, "A generalised Monkman-Grant relation for creep life prediction: An application to 1CrMoV rotor steel", JOURNAL OF MATERIALS SCIENCE, KLUWER ACADEMIC PUBLISHERS, BO, (20060412), vol. 41, no. 12, doi:10.1007/S10853-005-5506-7, ISSN 1573-4803, pages 3907 - 3915, and in KAZUHIRO KIMURA ET AL, "Creep Deformation, Rupture Strength, and Rupture Ductility of Grades T/P92 Steels", ASME 2014 SYMPOSIUM ON ELEVATED TEMPERATURE APPLICATION OF MATERIALS FOR FOSSIL, NUCLEAR, AND PETROCHEMICAL INDUSTRIES, (20140325), doi:10.1115/ETAM2014-1026, ISBN 978-0-7918-4074-0, page 193.

SUMMARY OF THE INVENTION

An aspect of the invention includes providing a method that allows the calculation of the creep elongation of a rotor according to the real working condition it undergoes during operation.

Another aspect of the invention includes providing a method by which the creep elongation of the rotor can be monitored.

These and further aspects are attained by providing a method for calculating and a method for monitoring in accordance with the accompanying claims.

BRIEF DESCRIPTION OF THE DRAWINGS

Further characteristics and advantages will be more apparent from the description of a preferred but nonexclusive embodiment of the method for calculating and method for monitoring the rotor creep elongation, illustrated by way of non-limiting example in the accompanying drawings, in which:

Figure 1 schematically shows a gas turbine;

Figure 2 shows a diagram providing a correlation for a given cross section among a reference temperature $T_{Ref}$, a creep elongation $U_r$, and rate of creep elongation $\Delta U_r / \Delta t = f(U_r, T_{ref})$;

Figure 3 shows a diagram providing a correlation for a given cross section among a reference temperature $T_{Ref}$, the gas turbine load, the creep elongation $U_r$, and rate of creep elongation $\Delta U_r / \Delta t = f(T_{ref}, Load, U_r)$;

Figure 4 shows a look-up table providing the relationship (correlation) for a given cross section among a reference temperature $T_{Ref}$, a creep elongation $U_r$, an rate of creep elongation $\Delta U_r / \Delta t$,

Figure 5 schematically shows the creep elongation and the incremental creep elongation of a rotor.

DETAILED DESCRIPTION OF EXEMPLARY EMBODIMENTS

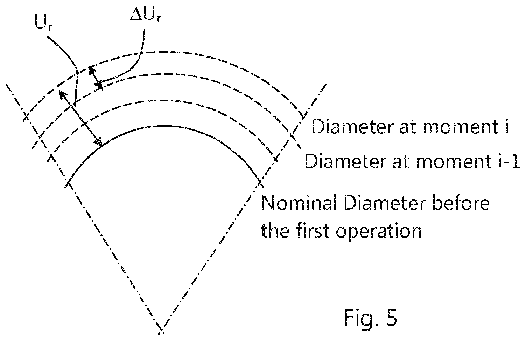

With reference to figure 5, the creep elongation $U_r$ is the total permanent growth the rotor undergoes during operation; incremental creep elongation $\Delta U_r$ (or $dU_r$) is the permanent growth the rotor undergoes between two successive sampling moments, rate of creep elongation is defined by $\Delta U_r/\Delta t$ (or $dU_r/dt$) (where t is time) .

The rate of rotor radial creep elongation can be calculated from the strain rate integration over the radius of the rotor as (equation 1):

$$\frac{dU_r}{dt} = \int_0^R \dot{\varepsilon}(\sigma,T)dr = \int_0^R \frac{d\varepsilon}{dt}dr$$

wherein

$dU_r/dt$ is the rate of creep elongation of the rotor in the radial direction,
$d\varepsilon/dt$ is the strain rate,
$\sigma$ is the stress through the rotor,
$T$ is the local, metal temperature of the rotor.

Since both stress and temperature in a rotor heated from the outside vary with the radial distance from the axis of the rotor, the strain rate also changes with the radial distance from the axis of the rotor.

Thus, the rate of creep elongation in the radial direction can be written as a function of average temperature and average stress along the radius. This assumption can be implemented by considering a control volume covering the entire rotor radius with an infinitesimal circumferential length. In this case the parameters in the equation of the rate of creep elongation will be average temperature and average stress over the rotor radius (equation 2) :

$$\frac{dU_r(t)}{dt} \propto \int_0^R T_{metal}(r)dr \text{ and } \int_0^R \sigma_e(r,t)dr$$

In this equation,

$$\int_0^R \sigma_e(r,t)dr$$

can be replaced with the radial displacement or creep elongation $U_r$. This is a prerequisite considering that the stress can be difficult to measure or calculate for any operation.

With these assumptions, the equation 2 can be written as (equation 3):

$$\frac{dU_r}{dt} \propto T_{metal}(r), U_r \rightarrow \frac{dU_r}{dt} = f(T_{metal}(r), U_r)$$

Furthermore, since it is difficult to measure the metal temperature in rotating components (i.e. the temperature of the rotor), and since the metal temperature of the rotor in general depends on a reference temperature and the load of the gas turbine, the equation 3 can be written as (equation 4):

$$\frac{dU_r}{dt} = f(T_{Ref}, Load, U_r)$$

Finite elements simulations can be carried out to provide the correlation f ($T_{ref}$, Load, $U_r$) of equation 4, for example in the form of tabular factors, formula or fitting surfaces.

Once the correlation f ($T_{ref}$, Load, $U_r$) has been obtained, the creep elongation at a given cross section of the rotor can be calculated as (equation 5):

$$U_r = \int_0^t \frac{dU_r}{dt}dt = \int_0^t f(T_{Ref}, Load, U_r)dt$$

Since $T_{Ref}$ is measured at a given time interval during the gas turbine operation, the integral in the equation 5 can be discretized and solved incrementally. In addition, considering that

$$U_{r\,i} = U_{r\,(i-1)} + \Delta U_{r\,i}$$

and considering that $\Delta U_{ri}$ is negligible compared to $U_{r(i-1)}$, equation 5 can be written as (equation 6):

$$U_r = \sum_{i=0}^{i=n} \frac{\Delta U_r}{\Delta t}\left(T_{Ref\,i}, Load_i, U_{r(i-1)}\right) \times \Delta t_i$$

If the effect of reference temperature $T_{Ref}$ and load on the rate of creep elongation of the rotor is judged to be the same, the equation 6 can be written only in dependence of the reference temperature, because the effect of the load is implicitly included together with the $T_{ref}$ (equation 7) :

$$U_r = \sum_{i=0}^{i=n} \frac{\Delta U_r}{\Delta t}\left(T_{Ref\,i}, U_{r(i-1)}\right) \times \Delta t_i$$

Otherwise if the effect of ambient temperature $T_{Ref}$ and load on the rate of creep elongation of the rotor is judged to be different, the equation 6 has to be used for calculating the creep elongation.

GAS TURBINE

In the following reference to a rotor of a gas turbine is made. It is clear that rotor has to be interpreted as a rotating cylindrical component belonging to a gas turbine or not, i.e. it can also be part of a machine different from a gas turbine.

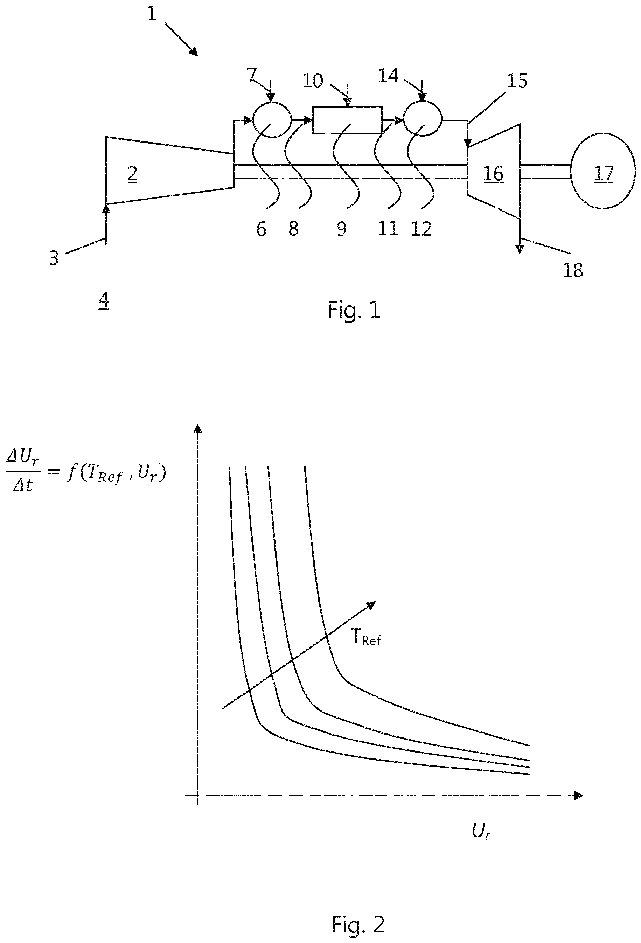

Figure 1 schematically shows a gas turbine 1, which comprises a compressor 2 that is supplied with air 3 from the ambient 4 (external ambient); the compressor 2 supplies compressed air to a first combustion chamber 6, in which a fuel 7 is fed, mixed with the compressed air and combusted, generating first hot gas 8 that is fed in a mixer 9 where dilution air 10 is fed and mixed with the first hot gas 8, generating second hot gas 11 that is supplied into a second combustor 12. In the second combustor 12 further fuel 14 is supplied, mixed with the second hot gas 11 and combusted, generated third hot gas 15 that is expanded in a turbine 16, which collects mechanical power, e.g. to activate an electrical generator 17. Exhaust gas 18 is discharged from the turbine 16.

The above described embodiment of gas turbine is only one of the possible types of gas turbines, it is clear that the method of the invention is not limited to this kind of gas turbine but can be applied to any gas turbine, e.g. comprising only a compressor, a combustion chamber and a turbine, or comprising a compressor a first combustion chamber, a first high pressure turbine, a second combustion chamber and a second low pressure turbine; further examples of gas turbine are possible.

METHOD FOR CALCULATING THE CREEP ELONGATION

With the judgment that $T_{Ref}$ and load have the same effect on the rate of creep elongation, the method for calculating the creep elongation at a given cross section of a rotor comprises providing, for that cross section, a correlation among:

   (i) a reference temperature $T_{Ref}$ indicative of the temperature of the rotor at the given cross section,
   (ii) a creep elongation $U_r$ of the rotor,
   (iii) a rate of creep elongation $\Delta U_r/\Delta t$.

Thus, according to the method, the temperature is periodically measured at successive sampling moments i; for example the measurement can be made every 10 minutes or 5 minutes or also every minute; any value for the sampling frequency is possible anyway according to the requirements.

The creep elongation $U_r$ for the given cross section of the rotor at the sampling moment i is thus calculated on the basis of the correlation using the equation 7, having as the inputs the measured value of the reference temperature $T_{Ref}$ at the sampling moment i and the creep elongation $U_r$ at the sampling moment i-1.

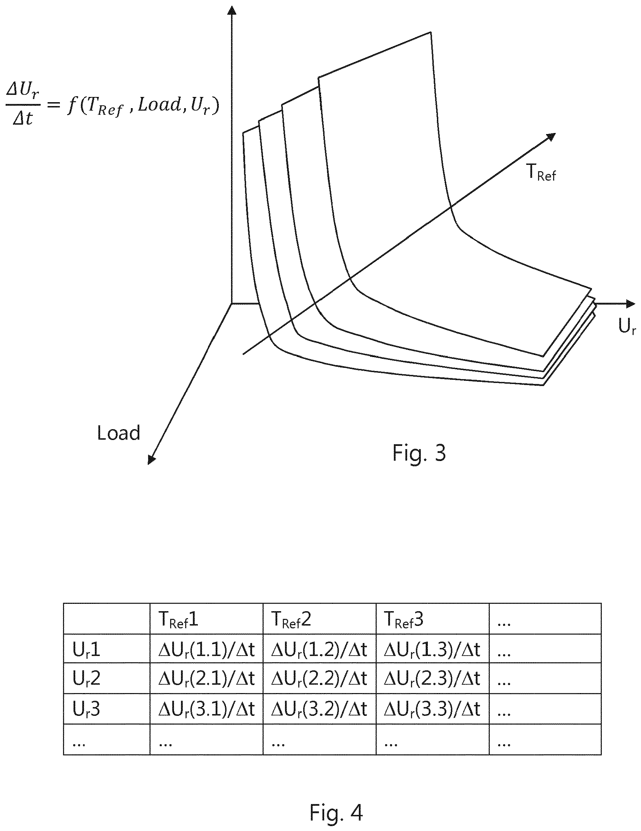

The correlation can be established for each cross section that is to be monitored on the basis of pre-defined ambient and load conditions. For example, the correlation can be defined by curves (figure 2) or look-up tables (figure 4) that provide a relationship among the different factors. In this case the figures 2, 4 are representative of correlations at a given cross section of the rotor.

The reference temperature $T_{Ref}$ is preferably a gas temperature, because this temperature can be easily and reliably measured.

In a first example the reference temperature $T_{Ref}$ (being a gas temperature) is the gas temperature at a zone adjacent and facing the given cross section.

In a second example the reference temperature $T_{Ref}$ (also being a gas temperature) is the temperature at the outlet of the compressor (this temperature is identified as Tk2), because this temperature is known and controlled and because on the basis of this temperature and using an imperial or analytical function or a state of the art gas turbine simulation software, such as the software NX available from Siemens, the temperatures at any position of the rotor can be calculated.

With the judgment that load and reference temperature $T_{Ref}$ have a different effect of the rate of creep elongation, the correlation has to include both load of the gas turbine and the reference temperature $T_{Ref}$; therefore in this case the correlation (figure 3) is provided among:

(i) a reference temperature $T_{Ref}$ indicative of the component temperature at a given cross section,
(ii) a creep elongation $U_r$ of the rotor,
(iii) a rate of creep elongation $\Delta Ur/\Delta t$,
(iv) the load of the gas turbine.

In this respect figure 3 shows a three-dimensional surface that defines the correlation among the different factors.

Also in this case, the temperature is periodically measured at successive sampling moments i and the creep elongation $U_r$ for the given cross section of the rotor at the sampling moment i is calculated on the basis of the correlation using the equation 6; in this case the inputs are the measured value of the reference temperature $T_{Ref}$ at the sampling moment i, the load of the gas turbine at the sampling moment i and the creep elongation $U_r$ at the sampling moment i-1.

In this case the correlation can be defined by surfaces (figure 3) or look-up tables that provide a relationship among the different factors.

The reference temperature $T_{Ref}$ is preferably a gas temperature, because this temperature can be easily and reliably measured.

For example, the gas temperature is the ambient temperature, i.e. the temperature of the ambient external to the gas turbine 1, because this temperature is known and on the basis of this temperature and the load of the gas turbine, the temperatures at any position of the rotor can be calculated, for example using an imperial or analytical function or a state of the art gas turbine simulation software, such as NX available from Siemens.

In a preferred and advantageous embodiment, the method is implemented via a computer readable medium stored and running on a computer (e.g. laptop, desktop, tablet, dedicated electronics, etc.). In this connection, the computer readable medium (e.g. a software) has instructions for calculating the creep elongation according to the described method for calculating.

CORRELATION

The correlation can be calculated in successive steps.

In a first step, boundary conditions for the operation of the gas turbine (ambient temperature and load) are provided; on the basis of these boundary conditions, state of the art gas turbine simulation methods are used to calculate the thermal conditions of the rotor. As an example, the following software can be used to simulate the gas turbine: NX produced by Siemens. In addition, since from this step all thermal features can be obtained, also the reference temperature can be calculated.

In a second step, the calculated thermal condition of the rotor is supplied as an input to a finite element method equipped with creep law, in order to calculate the rate of creep elongation over the rotor associated with the thermal conditions calculated at the first step.

The finite element method equipped with material creep law (this is a state of the art software) can calculate the rate of creep elongation over the whole rotor. The following software can be used as a finite element method with creep law: Abaqus produced by SIMULIA.

These steps can be repeated a number of times in order to calculate the rate of creep elongation for different boundary conditions of the first step (ambient temperature and/or gas turbine load).

Also the creep elongation can be calculated from the rate of creep elongation.

Thus, For each cross section of interest, the curves or look-up tables or other representing the correlation can be built using the calculated values of the rate of creep elongation and the given inputs (reference temperature $T_{Ref}$, load) and the calculated creep elongation.

For example between five and ten cross sections are monitored and thus the correlations are calculated for them, e.g. at the compressor, at the turbine and preferably also in correspondence of the combustion chamber(s).

When the influence of the ambient temperature and load on the rate of creep elongation is judged to be the same or substantially the same, the load of the gas turbine can be disregarded and the correlation is defined by different curves for different values of the reference temperature $T_{Ref}$, as visible in figure 2. Each curve refers to a reference temperature $T_{Ref}$ (figure 2) and provides the relationship between that reference temperature $T_{Ref}$, creep elongation $U_r$ and rate of creep elongation $\Delta U_r/\Delta t$.

When the influence of the reference temperature $T_{Ref}$ and load on the rate of creep elongation is judged to be different, different surfaces can be calculated for different values of the reference temperature $T_{Ref}$ and load, as visible in figure 3; in figure 3 each surface refers to a reference temperature $T_{Ref}$ and provides the relationship among that reference temperature $T_{Ref}$, load, creep elongation $U_r$ and rate of creep elongation $\Delta U_r/\Delta t$.

Naturally, even if the attached figures 2 and 3 provide a correlation depicted as a curves or surfaces, look-up tables, such as those shown in figure 4, or other graphical or numerical or other representations are also possible.

METHOD FOR MONITORING A CREEP ELONGATION

The present invention also refers to a method for monitoring a creep elongation of a rotor.

The method comprises

a. calculating the creep elongation according to the method for calculating the creep elongation described above,
b. measuring a creep elongation of the rotor,
c. comparing the calculated creep elongation with the measured creep elongation,
d. ascertaining whether the measured creep elongation is larger than the calculated creep elongation.

The measurement of the creep elongation required under point b. above can be done in different ways.

This measurement can be done during operation of the gas turbine; in this connection the gas turbine can be provided with a laser emitter that focuses a laser beam on the rotor; the rotor reflects the laser beam and the reflected laser beam is collected by a laser receiver; a control system connected to the laser emitter and laser receiver can calculate the deformation of the rotor of the basis of the angles between the emitted laser beam and the received laser beam. Other techniques are naturally possible.

In addition, the measured creep elongation can be measured during an outage of the machine. In this case the creep elongation can e.g. be measured by measuring tape.

On the basis of the ascertainment under point d., protective actions can be implemented in case the measured creep elongation is larger than the calculated creep elongation. These protective actions can include the emission of alarm signals and/or the stop and/or the reduction of the gas turbine load in case the gas turbine is in operation, or the emission of alarm signals or provision of safety boundary conditions for the gas turbine operation. Other measures are naturally possible.

In a preferred embodiment, the method is implemented via a computer readable medium. In this preferred embodiment, a computer readable medium (e.g. a software) has instructions for monitoring the creep elongation according to the described method for monitoring. The computer readable medium is stored on and runs on a computer (e.g. laptop, desktop, tablet, dedicated electronics, etc.).

In a preferred advantageous embodiment, the calculations are made on the basis of the initial diameter of the rotor, i.e. the creep elongation refers to the original diameter of the rotor before its first operation.

Naturally the features described may be independently provided from one another. For example, the features of each of the attached claims can be applied independently of the features of the other claims.

In practice the materials used and the dimensions can be chosen at will according to requirements and to the state of the art.

**Claims**

1. A method for calculating a creep elongation of a rotor, the method comprising

a. providing a correlation for a given cross section of the rotor among

o a reference temperature ($T_{Ref}$) indicative of the temperature of the rotor,

o a creep elongation ($U_r$),
o a rate of creep elongation ($\Delta U_r/\Delta t$),

b. measuring the reference temperature ($T_{Ref}$) at a sampling moment i;
c. calculating on the basis of the correlation the creep elongation ($U_{ri}$) of the rotor at the sampling moment i on the basis of the measured reference temperature ($T_{Ref}$) at the sampling moment i and the creep elongation at the sampling moment i-1;

wherein the creep elongation ($U_r$) of the rotor is calculated as:

$$U_r = \sum_{i=0}^{i=n} \frac{\Delta U_r}{\Delta t}(T_{Ref\,i}, U_{r(i-1)}) \times \Delta t_i$$

if an effect of reference temperature ($T_{Ref}$) and load on the rate of creep elongation ($\Delta U_r/\Delta t$) of the rotor is judged to be the same, or the creep elongation ($U_r$) of the rotor is calculated as:

$$U_r = \sum_{i=0}^{i=n} \frac{\Delta U_r}{\Delta t}(T_{Ref\,i}, Load_i, U_{r(i-1)}) \times \Delta t_i$$

if the effect of reference temperature ($T_{Ref}$) and load on the rate of creep elongation ($\Delta U_r/\Delta t$) of the rotor is judged to be different ,wherein the load of the gas turbine engine ($Load_i$) is included in the correlation.

2. The method of claim 1, **characterized in that** the reference temperature is a gas temperature.

3. The method of claim 2, **characterized in that** the gas temperature is a temperature at the outlet of the compressor of a gas turbine (*Tk2i*).

4. The method of claim 1 or 2 **characterized in that** the gas temperature is an ambient temperature.

5. The method of claim any of the previous claims, **characterized in that** the machine is a gas turbine.

6. A computer readable medium stored and/or running or computer comprising instructions for calculating the creep elongation according to the method of any of claims 1 to 5.

7. A method for monitoring a creep elongation of a rotor, the method comprising

a. calculating the creep elongation of the rotor according to the method of any of claims 1 to 6,
b. measuring a creep elongation of the rotor,
c. comparing the calculated creep elongation with the measured creep elongation,
d. ascertaining whether the measured creep elongation is larger than the calculated creep elongation.

8. The method of claim 7, **characterized in that** measuring the creep elongation is done during the operation of the machine.

9. The method of claim 7, **characterized in that** measuring the creep elongation is done during an outage of the machine.

10. The method of any of claims 8 through 9, **characterized by** implementing protective actions in case the measured creep elongation is larger than the calculated creep elongation.

11. A computer readable medium stored and/or running on a computer comprising instructions for monitoring the creep elongation according to the method of any of claims 8 to 10.

**Patentansprüche**

1. Verfahren zur Berechnung einer Kriechdehnung eines Rotors, welches Verfahren enthält:

   a. Bereitstellen einer Korrelation für einen gegebenen Querschnitt des Motors aus

   ◦ einer Referenztemperatur ($T_{REF}$), die die Temperatur des Rotors angibt,
   ◦ einer Kriechdehnung ($U_r$)
   ◦ einer Rate der Kriechdehnung ($\Delta U_r/\Delta t$),

   b. Messen der Referenztemperatur ($T_{REF}$) in einem Abtastmoment i;
   c. Berechnen, auf der Basis der Korrelation, der Kriechdehnung ($U_{ri}$) des Rotors im Abtastmoment i auf der Basis der gemessenen Referenztemperatur ($T_{REF}$) im Abtastmoment i und der Kriechdehnung im Abtastmoment i-1;

   wobei die Kriechdehnung ($U_r$) des Rotors berechnet wird als:

$$U_r = \sum_{i=0}^{i=n} \frac{\Delta U_r}{\Delta t}(T_{Ref\,i}, U_{r(i-1)}) \times \Delta t_i$$

   wenn ein Effekt der Referenztemperatur ($T_{REF}$) und Last auf die Rate der Kriechdehnung ($\Delta U_r/\Delta t$) des Rotors als gleich beurteilt wird, oder die Kriechdehnung ($U_r$) des Rotors berechnet wird als:

$$U_r = \sum_{i=0}^{i=n} \frac{\Delta U_r}{\Delta t}(T_{Ref\,i}, Load_i, U_{r(i-1)}) \times \Delta t_i$$

   wenn der Effekt der Referenztemperatur ($T_{REF}$) und Last auf die Rate der Kriechdehnung ($\Delta U_r/\Delta t$) des Rotors als verschieden beurteilt wird, wobei die Last des Gasturbinenmotors (Load$_i$) in die Korrelation einbezogen wird.

2. Verfahren nach Anspruch 1, **dadurch gekennzeichnet, dass** die Referenztemperatur eine Gastemperatur ist.

3. Verfahren nach Anspruch 2, **dadurch gekennzeichnet, dass** die Gastemperatur eine Temperatur am Auslass des Verdichters einer Gasturbine ($Tk2_i$) ist.

4. Verfahren nach Anspruch 1 oder 2, **dadurch gekennzeichnet, dass** die Gastemperatur eine Umgebungstemperatur ist.

5. Verfahren nach einem der vorhergehenden Ansprüche, **dadurch gekennzeichnet, dass** die Maschine eine Gasturbine ist.

6. Computerlesbares Medium, das auf einem Computer gespeichert ist und/oder abläuft, enthaltend Befehle zur Berechnung der Kriechdehnung gemäß dem Verfahren nach einem der Ansprüche 1 bis 5.

7. Verfahren zur Überwachung einer Kriechdehnung eines Rotors, welches Verfahren enthält:

   a. Berechnen der Kriechdehnung des Rotors gemäß dem Verfahren nach einem der Ansprüche 1 bis 6,
   b. Messen einer Kriechdehnung des Rotors,
   c. Vergleichen der berechneten Kriechdehnung mit der gemessenen Kriechdehnung,
   d. Sicherstellen, ob die gemessene Kriechdehnung größer ist als die berechnete Kriechdehnung.

8. Verfahren nach Anspruch 7, **dadurch gekennzeichnet, dass** die Messung der Kriechdehnung während des Betriebs der Maschine erfolgt.

9. Verfahren nach Anspruch 7, **dadurch gekennzeichnet, dass** die Messung der Kriechdehnung während einer Standzeit der Maschine erfolgt.

**10.** Verfahren nach einem der Ansprüche 8 bis 9, **gekennzeichnet durch** die Umsetzung von Schutzmaßnahmen im Fall, dass die gemessene Kriechdehnung größer ist als die berechnete Kriechdehnung.

**11.** Computerlesbares Medium, das auf einem Computer gespeichert ist und/oder abläuft, enthaltend Befehle zur Überwachung der Kriechdehnung gemäß dem Verfahren nach einem der Ansprüche 8 bis 10.

**Revendications**

**1.** Procédé destiné à calculer une élongation par fluage d'un rotor, le procédé comprenant les étapes suivantes

   a. fournir une corrélation d'une section transversale donnée du rotor parmi

   - une température de référence ($T_{Ref}$) indicative de la température du rotor,
   - une élongation par fluage (Ur),
   - une vitesse d'élongation par fluage ($\Delta U_r / \Delta t$),

   b. mesurer la température de référence ($T_{Ref}$) à un instant d'échantillonnage i ;
   c. calculer, sur la base de la corrélation, l'élongation par fluage ($U_{ri}$) du rotor à l'instant d'échantillonnage i sur la base de la température de référence mesurée ($T_{Ref}$) à l'instant d'échantillonnage i, et de l'élongation par fluage à l'instant d'échantillonnage i -1;

dans lequel l'élongation par fluage ($U_r$) du rotor est calculée ainsi :

$$U_r = \sum_{i=0}^{i=n} \frac{\Delta U_r}{\Delta t}(T_{Ref\,i}, U_{r(i-1)}) \times \Delta t_i$$

si l'effet de la température de référence ($T_{Ref}$) et de la charge sur la vitesse d'élongation par fluage ($\Delta U_r / \Delta t$) du rotor est jugé comme étant identique, l'élongation par fluage ($U_r$) du rotor est calculée ainsi :

$$U_r = \sum_{i=0}^{i=n} \frac{\Delta U_r}{\Delta t}(T_{Ref\,i}, Load_i, U_{r(i-1)}) \times \Delta t$$

si l'effet de la température de référence ($T_{Ref}$) et de la charge sur la vitesse d'élongation par fluage ($\Delta U_r / \Delta t$) du rotor est jugé comme étant différent, dans lequel la charge de la turbine à gaz (Loadi) est incluse dans la corrélation.

**2.** Procédé selon la revendication 1, **caractérisé en ce que** la température de référence est une température de gaz.

**3.** Procédé selon la revendication 2, **caractérisé en ce que** la température de gaz est la température à la sortie du compresseur d'une turbine à gaz ($Tk2_i$).

**4.** Procédé selon la revendication 1 ou 2, **caractérisé en ce que** la température de gaz est la température ambiante.

**5.** Procédé selon l'une quelconque des revendications précédentes, **caractérisé en ce que** la machine est une turbine à gaz.

**6.** Support pouvant être lu par un ordinateur, stocké et / ou fonctionnant dans un ordinateur, comprenant des instructions destinées à calculer une élongation par fluage selon le procédé selon l'une quelconque des revendications 1 à 5.

**7.** Procédé destiné à surveiller une élongation par fluage d'un rotor, le procédé comprenant les étapes suivantes

   a. calculer l'élongation par fluage du rotor selon le procédé selon l'une quelconque des revendications 1 à 6,

b. mesurer l'élongation par fluage du rotor,

c. comparer l'élongation par fluage calculée, à l'élongation par fluage mesurée,

d. déterminer si l'élongation par fluage mesurée est supérieure à l'élongation par fluage calculée.

**8.** Procédé selon la revendication 7, **caractérisé en ce que** la mesure de l'élongation par fluage, est réalisée au cours du fonctionnement de la machine.

**9.** Procédé selon la revendication 7, **caractérisé en ce que** la mesure de l'élongation par fluage, est réalisée au cours d'une indisponibilité de la machine.

**10.** Procédé selon la revendication 8 ou 9, **caractérisé par** la mise en œuvre de mesures de protection dans le cas où l'élongation par fluage mesurée, serait supérieure à l'élongation par fluage calculée.

**11.** Support pouvant être lu par un ordinateur, stocké et / ou fonctionnant dans un ordinateur, comprenant des instructions destinées à surveiller l'élongation par fluage selon le procédé selon l'une quelconque des revendications 8 à 10.

Fig. 1

$$\frac{\Delta U_r}{\Delta t} = f(T_{Ref}, U_r)$$

Fig. 2

$$\frac{\Delta U_r}{\Delta t} = f(T_{Ref}, Load, U_r)$$

Fig. 3

| | $T_{Ref}1$ | $T_{Ref}2$ | $T_{Ref}3$ | ... |
|---|---|---|---|---|
| $U_r1$ | $\Delta U_r(1.1)/\Delta t$ | $\Delta U_r(1.2)/\Delta t$ | $\Delta U_r(1.3)/\Delta t$ | ... |
| $U_r2$ | $\Delta U_r(2.1)/\Delta t$ | $\Delta U_r(2.2)/\Delta t$ | $\Delta U_r(2.3)/\Delta t$ | ... |
| $U_r3$ | $\Delta U_r(3.1)/\Delta t$ | $\Delta U_r(3.2)/\Delta t$ | $\Delta U_r(3.3)/\Delta t$ | ... |
| ... | ... | ... | ... | ... |

Fig. 4

Fig. 5

# EP 3 656 987 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8770913 B1

### Non-patent literature cited in the description

- A generalised Monkman-Grant relation for creep life prediction: An application to 1CrMoV rotor steel. JOURNAL OF MATERIALS SCIENCE. KLUWER ACADEMIC PUBLISHERS, 12 April 2006, vol. 41, 3907-3915

- Creep Deformation, Rupture Strength, and Rupture Ductility of Grades T/P92 Steels. **KAZUHIRO KIMURA et al.** ASME 2014 SYMPOSIUM ON ELEVATED TEMPERATURE APPLICATION OF MATERIALS FOR FOSSIL, NUCLEAR, AND PETROCHEMICAL INDUSTRIES. 25 March 2014, 193